# EUROPEAN PATENT APPLICATION

(11) **EP 1 386 725 A1**
(43) Date of publication of application: **04.02.2004**
(21) Application number: 03102146.2
(22) Date of filing: 14.07.2003
(51) Int. Cl.: B32B 25/16, B32B 25/02, C08J 5/06

(54) **Composite having rubber compound with hydrotalcite**

(30) Priority: 22.07.2002 US 397883 P
(71) Applicant: THE GOODYEAR TIRE & RUBBER COMPANY, Akron, Ohio 44316-0001 (US)
(72) Inventor: Kerstetter, Randal Howard III, OH-44281, Wadsworth (US); Pilkington, Mervin Victor, OH-44319, Akron (US)
(74) Representative: Kutsch, Bernd

(57) **Abstract**

The present invention is directed to a composite material comprising textile fibers having distributed over surface portions thereof an RFL adhesive, and a vulcanizable rubber composition comprising 50 to 100 parts by weight of polychloroprene rubber, zero to 50 parts by weight of at least one additional rubber, and from 0.1 to 40 parts by weight of a hydrotalcite.

## Description

### Field of the Invention

The present invention is directed to a composite material comprising textile fibers having distributed over surface portions thereof an RFL adhesive, and a vulcanizable rubber composition comprising 50 to 100 parts by weight of polychloroprene rubber, zero to 50 parts by weight of at least one additional rubber, and from 0.1 to 40 parts by weight of a hydrotalcite.

### Background of the Invention

In the manufacture of many fabric-reinforced, molded rubber articles, it is desirable to obtain strong adherence between the fabric and the rubber, and also high resistance to deterioration of the bond with flexing of the structure.

One specific example of an industrial product that typically utilizes a composite material is an air sleeve. Air sleeves have a rubber innerliner, two plies of cord fabric, and a rubber cover. These sleeves see their greatest commercial usage in the automotive helper spring market by being mounted as air springs on shock absorbers and struts. Other uses include truck cab suspension springs, truck driver seat springs, automobile air springs, and a variety of industrial air springs.

The plies of cord fabric are contained within a reinforcement layer, which along with the cord fabric includes an elastomeric base made from a rubber compound. The reinforcement layer may be provided from a plurality of different types of materials. The rubber compound of the elastomeric base is selected from among elastomers conventionally used in manufacturing air sleeves, included, but not limited to elastomers such as polychloroprene, poly-epichlorohydrin, polyisobutylene, halogenated-polyisobutylene, natural rubber, polyisoprene, polybutadiene, styrene-butadiene, and blends of such elastomers. Also typically included in the rubber compound are various additives, including but not limited to acid acceptors such as magnesium oxide.

The adhesion of cord fabric to the elastomeric base is essential for acceptable performance of composites in applications such as air sleeves. In particular, the adhesion of nylon cord to polychloroprene compound is essential for field performance, especially for its high stress tolerance. An adhesive based on a styrene-butadiene rubber (SBR) latex, a vinylpyridine/styrene/butadiene terpolymer latex, and a resorclnol/formaldehyde condensate is typically used to adhere nylon cord to a polychloroprene rubber compound in a polychloroprene composite.

Magnesium oxide (MgO) is often used as an acid acceptor in polychloroprene rubber compounds to provide scorch safety and improved heat aging, however its addition generally compromises adhesion in polychloroprene composites. It would therefore be advantageous to have a rubber compound for use in air sleeve that reduces or eliminates the use of MgO.

### Summary of the Invention

The present invention is directed to a composite material comprising textile fibers having distributed over surface portions thereof an RFL adhesive (**R**esorcinol-**F**ormaldehyde-**L**atex), and a vulcanizable rubber composition comprising 50 to 100 parts by weight of polychloroprene rubber, zero to 50 parts by weight of at least one additional rubber, and from 0.1 to 40 parts by weight of a hydrotalcite.

The present invention is also directed to a method of adhering textile fibers to a vulcanizable rubber composition in a composite material, comprising obtaining textile fibers having distributed over surface portions thereof an RFL adhesive, and contacting the textile fibers with a vulcanizable rubber composition comprising 50 to 100 parts by weight of polychloroprene rubber, zero to 50 parts by weight of at least one additional rubber, and from 0.1 to 40 parts by weight of a hydrotalcite.

### Description of the Invention

In one embodiment, the present invention is directed to a composite material comprising textile fibers having distributed over surface portions thereof an RFL adhesive, and a vulcanizable rubber composition comprising 50 to 100 parts by weight of polychloroprene rubber, especially 60 to 90 parts by weight of polychloroprene rubber, zero to 50 parts by weight of at least one additional rubber, especially 10 to 40 parts by weight of at least one additional rubber, and from 0.1 to 40 parts by weight of a hydrotalcite.

The composite material includes a curable rubber composition. One component of the curable rubber composition is polychloroprene. The cureable or vulcanizable rubber composition may include 50 to 100 parts by weight of polychloroprene as its elastomeric component; optionally, the rubber composition may include up to 50 parts by weight of at least one additional rubber selected from among elastomers conventionally used in manufacturing air sleeves, included, but not limited to elastomers such as poly-epichlorohydrin, polyisobutylene, halogenated-polyisobutylene, natural rubber, polyisoprene, polybutadiene, styrene-butadiene, and blends of such elastomers.

In curable rubber compositions used as components of articles such as air sleeves, and particularly in curable rubber compositions including halogen containing elastomers, it is often desirable to include an acid acceptor. Halogen containing elastomers may undergo degradation during processing and use, leading to release of corrosive halogen or acid substances. Typically, magnesium oxide is added as an acid acceptor in polychloroprene air sleeve compounds. However, the magnesium oxide may negatively impact adhesion of the compound to cord fabric in the reinforcement layer. To avoid this negative impact on adhesion while providing acid scavenging activity, it has been found that hydrotalcites are useful in this capacity in an air sleeve curable rubber composition.

In its naturally occuring form, hydrotalcite is mined in small quantities in Russia and Norway. Synthetic forms produced in commercial quantities may generally be described by the formula (I)

Mg₍₁₋ₓ₎Alₓ(OH)₂(CO₃)_{x/2} • n H₂O; 0.25 < x < 0.33. (I)

Thus synthetic hydrotalcite as described by formula (I) may include a mixture of various compounds within the given range of x. Synthetic forms of hydrotalcite are available from several sources, including DHT-4A2® and Alcamizer® from Kyowa Chemical Industry Co., Ltd., Sorbacid® 911 from Sud-Chemie AG, Hycite® 713 from Ciba Specialty Chemicals, and Hysafe® from Huber.

Hydrotalcite may be present in the curable rubber composition in a range of from 0.1 to 40 parts by weight of hydrotalcite per 100 parts by weight of elastomer, in other words, from 0.1 to 40 phr (parts per hundred rubber). In an alternative embodiment, the hydrotalcite may be present in a range of from 0.5 to 20 phr. In another alternative embodiment, the hydrotalcite may be present in a range from 1 to 10 phr.

In addition to hydrotalcite as an acid acceptor in the curable rubber composition, in another embodiment the curable rubber composition may include one or more second acid acceptors. These second acid acceptors may include magnesium oxide, calcium oxide, calcium hydroxide, and lead oxide, among others. The second acid acceptor may be present in generally a minor amount, if any, with the hydrotalcite present in a major amount. By minor and major amounts, it is understood that the hydrotalcite is present in an amount of greater than or equal to 50 percent by weight of the total amount of acid acceptor present in the curable rubber composition, and that the second acid acceptor, if any, is present in an amount of less than or equal to 50 percent by weight of the total amount of acid acceptor in the curable rubber composition.

In addition to the elastomers and hydrotalcite and second acid acceptors, if any, in the curable rubber composition, fillers may be also present. The amount of such fillers may range from 10 to 250 phr. Preferably, the filler is present in an amount ranging from 20 to 100 phr.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

Commonly employed carbon blacks can be used as a conventional filler. Representative examples of such carbon blacks include N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP No. ranging from 34 to 150cm³/100 g.

Other fillers may be present in the vulcanizable rubber composition, including talcs, clays, metal carbonates, starches, or any other commonly used rubber fillers.

It may be preferred to have the rubber composition for use in the composite material to additionally contain a conventional sulfur containing organosilicon compound. Specific examples of sulfur containing organosilicon compounds which may be used in accordance with the present invention include:
3,3'-bis(trimethoxysilylpropyl) disulfide, 3,3'-bis (triethoxysilylpropyl) disulfide,
3,3'-bis(triethoxysilylpropyl) tetrasulfide, 3,3'-bis(triethoxysilylpropyl) octasulfide,
3,3'-bis(trimethoxysilylpropyl) tetrasulfide, 2,2'-bis(triethoxysilylethyl) tetrasulfide,
3,3'-bis(trimethoxysilylpropyl) trisulfide, 3,3'-bis(triethoxysilylpropyl) trisulfide,
3,3'-bis(tributoxysilylpropyl) disulfide, 3,3'-bis(trimethoxysilylpropyl) hexasulfide,
3,3'-bis(trimethoxysilylpropyl) octasulfide,
3,3'-bis(trioctoxysilylpropyl) tetrasulfide, 3,3'-bis(trihexoxysilylpropyl) disulfide,
3,3'-bis(tri-2"-ethylhexoxysilylpropyl) trisulfide,
3,3'-bis(triisooctoxysilylpropyl) tetrasulfide,
3,3'-bis(tri-t-butoxysilylpropyl) disulfide,
2,2'-bis(methoxy diethoxy silyl ethyl) tetrasulfide,
2,2'-bis(tripropoxysilylethyl) pentasulfide,
3,3'-bis(tricyclonexoxysllylpropyl) tetrasulfide,
3,3'-bis(tricyclopentoxysilylpropyl) trisulfide,
2,2'-bis(tri-2"-methylcyclohexoxysllylethyl) tetrasulfide,
bis(trimethoxysilyl methyl) tetrasulfide,
3-methoxy ethoxy propoxysilyl 3'-diethoxybutoxy-silylpropyltetrasulfide,
2,2'-bis(dimethyl methoxysilylethyl) disulfide,
2,2'-bis(dimethyl sec.butoxysilylethyl) trisulfide,
3,3'-bis(methyl butylethoxysilylpropyl) tetrasulfide,
3,3'-bis(di t-butylmethoxysilylpropyl) tetrasulfide,
2,2'-bis(phenyl methyl methoxysilylethyl) trisulfide,
3,3'-bis(diphenyl isopropoxysilylpropyl) tetrasulfide,
3,3'-bis(diphenyl cyclohexoxysilylpropyl) disulfide,
3,3'-bis(dimethyl ethylmercaptosilylpropyl) tetrasulfide,
2,2'-bis(methyl dimethoxysilylethyl) trisulfide,
2,2'-bis(methyl ethoxypropoxysilylethyl) tetrasulfide,
3,3'-bis(diethyl methoxysilylpropyl) tetrasulfide,
3,3'-bis(ethyl di-sec. butoxysilylpropyl) disulfide,
3,3'-bis(propyl diethoxysilylpropyl) disulfide,
3,3'-bis(butyl dimethoxysilylpropyi) trisulfide,
3,3'-bis(phenyl dimethoxysilylpropyl) tetrasulfide,
3-phenyl ethoxybutoxysilyl 3'-trimethoxysilylpropyl tetrasulfide,
4,4'-bis(trimethoxysilylbutyl) tetrasulfide, 6,6'-bis(triethoxysilylhexyl) tetrasulfide,
12,12'-bis(triisopropoxysilyl dodecyl) disulfide,
18,18'-bis(trimethoxysilyloctadecyl) tetrasulfide,
18,18'-bis(tripropoxysilyloctadecenyl) tetrasulfide,
4,4'-bis(trimethoxysilyl-buten-2-yl) tetrasulfide,
4,4'-bis(trimethoxysilylcyclohexylene) tetrasulfide,
5,5'-bis(dimethoxymethylsilylpentyl) trisulfide,
3,3'-bis(trimethoxysilyl-2-methylpropyl) tetrasulfide,
3,3'-bis(dimethoxyphenylsilyl-2-methylpropyl) disulfide.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide.

The amount of the sulfur containing organosilicon compound in a rubber composition will vary depending on the level of other additives that are used. Generally speaking, the amount will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur vulcanizing agent is elemental sulfur. The sulfur vulcanizing agent may be used in an amount ranging from 0 to 8 phr, Typical amounts of tackifier resins, if used, comprise 0 to 10 phr. Typical amounts of processing aids comprise 0 to 50 phr. Such processing aids can include, for example, aromatic, naphthenic, and/or paraffinic processing oils. Typical amounts of antioxidants comprise 1 to 10 phr. Representative antioxidants may be, for example, diphenyl-p-phenylenediamine and others, such as, for example, those disclosed in the Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise zero to 1 phr. Typical peptizers may be, for example, pentachlorothiophenol and dibenzamidodiphenyl disulfide.

Accelerators may be used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber and inversion carbon black are mixed in one or more non-productive mix stages. The terms "non-productive" and "productive" mix stages are well known to those having skill in the rubber mixing art. The inversion carbon black may be added as a separate ingredient or in the form of a masterbatch. The rubber composition containing the inversion carbon black and tin-amino functionalized rubber, as well as the sulfur-containing organosilicon compound, if used, may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The composite of the present invention includes, along with the vulcanizable rubber composite, textile fibers treated with an RFL type adhesive dip. Textile fibers in the form of suitable cord or fabric may be in various forms, including woven fabrics, knitted fabric, or spun bonded fabric, and fiber cord. The cord or fabric may be comprised of various materials typically used as reinforcement in composite materials, including rayon, nylon, polyester, aramid, cotton, and combinations thereof.

The composite material includes an adhesive composition useful in adhering synthetic fibers to the vulcanizable rubber composition. In one embodiment, the so-called RFL adhesive (**R**esorcinol-**F**ormaldehyde-**L**atex) may be comprised of
(A) resorcinol,
(B) formaldehyde,
(C) the styrene-butadiene copolymer latex, and
(D) vinylpyridine-styrene-butadiene terpolymer latex.

The RFL adhesive dip is in general used in the form of an aqueous latex. The latices are prepared by free radical emulsion polymerization of styrene and butadiene to form a copolymer latex, and free radical emulsion polymerization of styrene, butadiene, and vinylpyridine to form a terpolymer latex. The charge compositions used in the preparation of the latices contain monomers, at least one surfactant, and at least one free radical initiator. Such latices are well known, and a suitable RFL dip made be made by any of various methods as are known in the art, for example, following the teaching of US-A- 3,525,703.

The resorcinol reacts with formaldehyde to produce a resorcinolformaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture. The resorcinol may be dissolved in water to which around 37 percent formaldehyde has been added together with a strong base such as sodium hydroxide. The aqueous solution of the resole or condensation product or resin is mixed with the styrene/butadiene latex and the vinylpyridine-styrene-butadiene latex. Polychloroprene latexes may also be used along with or in place of the styrene/butadiene latex and vinylpyridiene-styrene-butadiene latex.

The RFL adhesive may optionally include a blocked isocyanate. In one embodiment from 1 to 20 parts by solid of blocked isocyanate is added to the adhesive. The blocked isocyanate may be any suitable blocked isocyanate known to be used in RFL adhesive dips, including but not limited to caprolactam blocked methylene-bis-(4-phenylisocyanate), such as Grilbond-IL6 available from EMS American Grilon, Inc, and phenol formaldehyde blocked isocyanates as disclosed in US-A- 3,226,276; 3,268,467; and 3,298,984.

It is normally preferable to first prepare the copolymer latex and then add the partially condensed condensation product. However, the ingredients (the resorcinol and formaldehyde) can be added to the latex in the uncondensed form and the entire condensation can then take place in situ. The latex tends to keep longer and be more stable if it is kept at an alkaline pH level.

In accordance with this invention, the cord or fabric to be treated is dipped for one to three minutes in the RFL dip and dried at a temperature within the range of 75°C to 265°C for 0.5 minutes to 20 minutes and thereafter calendered into the rubber and cured therewith. The drying step utilized will preferably be carried out by passing the cord through 2 or more drying ovens which are maintained at progressively higher temperatures. For instance, it is highly preferred to dry the cord by passing it through a first drying oven which is maintained at a temperature of 250°F (121°C) to 300°F (149°C) and then to pass it through a second oven which is maintained at a temperature which is within the range of 350°F (177°C) to 500°F (260°F). It should be appreciated that these temperatures are oven temperatures rather than the temperature of the cord being dried. The cord will preferably have a total residence time in the drying ovens which is within the range of 1 minute to 5 minutes. For example, a residence time of 30 seconds to 90 seconds in the first oven and 30 seconds to 90 seconds in the second oven could be employed.

The dip process may be carried out in one or two steps. For a one step process, the solids content of the dip may be adjusted to a higher level to achieve adequate coverage. For a two-step process, the solids content of the dip for the second step may be adjusted to approximately one-half to two-thirds of the solids content of the first step, to obtain the desired coverage. Adjustment of the solids content of the dips for a one or two-step dipping process is done as required, as is known to one skilled in the art.

Vulcanization of composite of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such composites can be built, shaped, molded and cured by various methods which are known and will be readily apparent to those having skill in such art. Methods for making air sleeves are described in US-A- 3,794,538 and 6,264,178.

In another embodiment, the invention is directed to a method of adhering a curable polychloroprene rubber composition to textile fibers in a polychloroprene composite. The inclusion of hydrotalcite in the curable rubber composition as hereinbefore described results in a rubber compound that resists degradation by halogen and acid substances, yet maintains adhesion to reinforcements as compared to a similar rubber compound containing no acid acceptor. While the method of adhesion is herein described with reference to polychloroprene composite useful in an air sleeve, the invention is not so limited. Any application of a rubber compound wherein a combination of resistance to degradation by halogen and acid substances during processing and use, and of adhesion to a reinforcement is desirable may come within the scope of the invention. Thus, it is envisioned to included other applications including automotive belts, tires, conveyor belts, automotive hoses, fuel transport hoses, automotive tracks, etc. The invention is further illustrated by the following non-limiting example.

### EXAMPLE 1

This example illustrates the effect of replacing the magnesium oxide with hydrotalcite in two standard polychloroprene compounds in a nylon/polychloroprene composite. Instead of hydrotalcite calcium oxide could also be used as explained in example 2. Polychloroprene compounds were prepared according to Table 1, with amounts in parts per hundred resin (phr). Polychloroprene test samples were prepared using samples 1-5 and tested for physical properties as indicated in Table 2. Polychloroprene/nylon composites were prepared using samples 1-5 and nylon cord dipped in a standard RFL adhesive dip (styrene-butadiene and vinylpyridine-styrene-butadiene) and tested for adhesion as indicated in Table 2. Tests were done according to the following protocols:

### Rheometer

ODR at 302°F (150°C), ASTM D2048
Mooney Scorch at 250°F (121°C), ASTM D1646

### Tensile, Elongation, and Hardness

Original, ASTM D412
Air oven aged 168 hours at 212°F (100°C), ASTM D573
Air oven aged 70 hours at 257°F (125°C), ASTM D573
Air oven aged 168 hours at 257°F (125°C), ASTM D573

### Adhesion to RFL nylon, modified ASTM D413

Original
Oven aged - 70 hours at 212°F (100°C)
Bin cured - green compound aged 2 weeks at 120°F (49°C)

### Other

Die C tear, ASTM D624
Compression set "B", 22 hours at 212°F (100°C), ASTM D395
Solenoid Brittleness, ASTM D746

**Table 1**

| Sample | 1 | 2 | 3 | 4 | 5 |
|---|---|---|---|---|---|
| Polychloroprene (1) | 100 | 100 | - | - | - |
| Polychloroprene (2) | - | - | 100 | 100 | 100 |
| Magnesium Oxide | 0 | 0 | 0 | 6.77 | 0 |
| Hydrotalcite (3) | 0 | 4 | 0 | 0 | 4 |

| | | | | | |
|---|---|---|---|---|---|
| ¹100 phr polychloroprene in a first standard compound containing sulfur, accelerators, and antioxidants. | | | | | |
| ²100 phr polychloroprene in a second standard compound containing sulfur, accelerators, and antioxidants. | | | | | |
| ³DHT-4A2, Kyowa Chemical Co. | | | | | |

**Table 2**

| Sample | 1 | 2 | 3 | 4 | 5 |
|---|---|---|---|---|---|
| **ODR Rheometer, 150°C** | | | | | |
| Min Torque (dNm) | 6.1 | 5.9 | 6.8 | 6.2 | 6 |
| Max Torque (dNm) | 27.8 | 30.1 | 28.5 | 30.9 | 30.1 |
| T90 (minutes) | 24 | 31.3 | 17.9 | 27.9 | 25.1 |

| **Mooney, 121°C, 30 minutes** | | | | | |
|---|---|---|---|---|---|
| MV (dNm) | 17.25 | 17.38 | 17.99 | 15.68 | 15.36 |
| T3 (minutes) | 19.35 | 25.43 | 15.53 | 17.95 | 24.55 |

| **Original Properties** | | | | | |
|---|---|---|---|---|---|
| Tensile strength (MPa) | 19.3 | 18.6 | 17.1 | 16.1 | 16.7 |
| Elongation at break (%) | 658 | 551 | 570 | 443 | 349 |
| Modulus 100 (MPa) | 1.25 | 1.23 | 1.26 | 1.71 | 1.57 |
| Modulus 300 (MPa) | 7.26 | 7.00 | 7.77 | 9.93 | 9.46 |
| Hardness, Shore A | 52.1 | 52.6 | 51.1 | 54.7 | 53.5 |

| **Tear Strength, Original Die C** | | | | | |
|---|---|---|---|---|---|
| Tear Strength (N/mm) | 51.8 | 47.3 | 40.3 | 33.8 | 36.1 |

| **Compression Set, 22 Hours at 100°C** | | | | | |
|---|---|---|---|---|---|
| Percent set (%) | 42.16 | 40.95 | 40.74 | 33.01 | 34.95 |

| **Air Aged, 168 Hours at 100°C** | | | | | |
|---|---|---|---|---|---|
| Tensile strength (MPa) | 15.1 | 16.0 | 15.0 | 13.8 | 15.4 |
| Elongation at break (%) | 475 | 516 | 438 | 372 | 399 |
| Modulus 100 (MPa) | 1.80 | 1.62 | 2.11 | 2.69 | 2.39 |
| Modulus 300 (MPa) | 9.06 | 8.39 | 10.6 | 11.5 | 11.7 |
| Hardness (Shore A) | 60.6 | 58.4 | 60.6 | 65.9 | 61.9 |

| **Air Aged, 70 Hours at 125°C** | | | | | |
|---|---|---|---|---|---|
| Tensile strength (MPa) | 15.7 | 15.7 | 14.9 | 14.2 | 15.1 |
| Elongation at break (%) | 324 | 437 | 288 | 306 | 319 |
| Modulus 100 (MPa) | 3.14 | 2.25 | 3.88 | 3.94 | 3.45 |
| Modulus 300 (MPa) | 14.2 | 10.6 | | 14.1 | 14.3 |
| Hardness, Shore A | 69 | 64.5 | 70.5 | 72.6 | 70 |

| **Air Aged, 168 Hours at 125°C** | | | | | |
|---|---|---|---|---|---|
| Tensile strength (MPa) | 11.7 | 13.5 | 13.9 | 12.9 | 14 |
| Elongation at break (%) | 140 | 210 | 135 | 180 | 167 |
| Modulus 100 (MPa) | 7.98 | 5.56 | 10.1 | 8.91 | 8.7 |
| Modulus 300 (MPa) | - | - | - | - | |
| Hardness, Shore A | 82.4 | 77.9 | 84.7 | 86.1 | 83.6 |

| **Solenoid Brittleness** | | | | | |
|---|---|---|---|---|---|
| Temperature (°C) | -35.5 | -37.9 | -45.7 | -44.5 | -45.1 |

| **Adhesion** | | | | | |
|---|---|---|---|---|---|
| Cure 14 minutes at 171°C | | | | | |
| Original (N/cm) | 93.1 | 109 | 54.3 | 16.6 | 43.1 |
| 70 hours at 212°F | | | | | |
| Heat aged (N/cm) | 218* | 206* | 43.8 | 20.3 | 48.7 |

| Green Compound 2 weeks at 120°F | | | | | |
|---|---|---|---|---|---|
| Pre-aged (N/cm) | 61.3 | 133 | 5.95 | 7.7 | 24 |

| | | | | | |
|---|---|---|---|---|---|
| * rubber tear | | | | | |

Hydrotalcite was evaluated as addition to a standard polychloroprene compound (Compound 1) and in place of MgO in a standard polychloroprene compound (Compound 2). Hydrotalcite was found to improve scorch and heat aging properties, with no negative impact on adhesion. Bin cured adhesion was improved with hydrotalcite.
(A) Hydrotalcite in Polychloroprene Compound 1: The addition of hydrotalcite increased the scorch time of Polychloroprene Compound 1 significantly. Original physical properties were not affected while heat aged properties improved in all cases. There was no negative impact on original and heat aged adhesion, and bin cured adhesion was doubled.
(B) Hydrotalcite in Polychloroprene Compound 2: Hydrotalcite provided more scorch safety than MgO. Original and heat aged properties were nearly identical. Original and oven aged adhesion were higher than the MgO compounds, giving values similar to the polychloroprene compound 2 where MgO was removed. Bin cured adhesion was higher than both the control Polychloroprene Compound 2 containing MgO and the Polychloroprene Compound 2 without MgO.

Surprisingly and unexpectedly, hydrotalcite provides significant improvements in scorch time and heat aging while having no negative impact on original or heat aged adhesion. In fact, bin cured adhesion is improved, thus hydrotalcite is seen to provide a desirable, unexpected and surprising combination of resistance to degradation and enhancement of adhesion.

### EXAMPLE 2

This example further illustrates the effect of replacing the magnesium oxide with calcium oxide or hydrotalcite in polychloroprene compounds. Polychloroprene compounds were prepared according to Table 3, with amounts in parts per hundred resin (phr). Polychloroprene test samples were prepared using samples 6-9 and tested for physical properties as indicated in Table 4. Polychloroprene/nylon composites were prepared using samples 6-9 and nylon cord dipped in a standard RFL adhesive dip (styrene-butadiene and vinylpyridine-styrene-butadiene) and tested for adhesion as indicated in Table 4.

**Table 3**

| **Sample** | 6 | 7 | 8 | 9 |
|---|---|---|---|---|
| polychloroprene | 100 | 100 | 100 | 100 |
| carbon black | 45 | 45 | 45 | 45 |
| stearic acid | 1 | 1 | 1 | 1 |
| plasticizer | 12 | 12 | 12 | 12 |
| antidegradants | 9.5 | 9.5 | 9.5 | 9.5 |
| 100% MgO | 0 | 4 | 0 | 0 |
| 80% CaO | 0 | 0 | 5 | 0 |
| 100% hydrotalcite | 0 | 0 | 0 | 2 |
| zinc oxide | 5 | 5 | 5 | 5 |
| sulfur | 0.5 | 0.5 | 0.5 | 0.5 |
| cure accelerators | 3.5 | 3.5 | 3.5 | 3.5 |

**Table 4**

| **Sample** | **6** | **7** | **8** | **9** |
|---|---|---|---|---|
| **Mooney scorch, 121°C** | | | | |
| Minimum viscosity VISC | 20.5 | 19.8 | 21.5 | 19.9 |
| Time to 5 pt. rise, minutes | 25.5 | 29.1 | 32.2 | 37.1 |

| **ODR Rheometer, 150°C** | | | | |
|---|---|---|---|---|
| T50, minutes | 12.4 | 13.7 | 11.3 | 14.5 |
| T90, minutes | 25.4 | 29.9 | 18.7 | 29.5 |
| TS1 | 3.61 | 4.78 | 5.03 | 4.45 |
| Max torque | 25.8 | 33.5 | 31.7 | 26.9 |
| Min torque | 5.13 | 5.33 | 5.23 | 4.93 |
| Delta | 20.6 | 28.2 | 26.5 | 21.9 |

| **Original Properties** | | | | |
|---|---|---|---|---|
| Tensile (MPa) | 19.3 | 18.0 | 17.4 | 19.5 |
| Elongation, % | 706 | 559 | 559 | 656 |
| 50% Modulus (MPa) | 0.70 | 0.86 | 1.00 | 0.70 |
| 100% Modulus (MPa) | 1.10 | 1.46 | 1.57 | 1.12 |
| 200% Modulus(MPa) | 2.88 | 3.97 | 4.24 | 3.01 |
| 300% Modulus(MPa) | 6.20 | 8.08 | 8.41 | 6.46 |
| Hardness (Shore A) | 48 | 53 | 56 | 46 |

| **Air Aged, 70 Hours @ 100°C** | | | | |
|---|---|---|---|---|
| Tensile (MPa) | 17.4 | 16.6 | 15.6 | 17.7 |
| Elongation, % | 596 | 457 | 463 | 548 |
| 50% Modulus (MPa) | 0.85 | 1.19 | 1.24 | 0.91 |
| 100% Modulus (MPa) | 1.46 | 2.19 | 2.16 | 1.63 |
| 200% Modulus (MPa) | 3.97 | 5.78 | 5.63 | 4.43 |
| 300% Modulus (MPa) | 7.83 | 10.50 | 10.05 | 8.70 |
| Hardness (Shore A) | 52 | 58 | 57 | 52 |

| **Retentions** | | | | |
|---|---|---|---|---|
| Retained Tensile, % | 90 | 92 | 90 | 91 |
| Retained Elongation, % | 84 | 82 | 83 | 84 |
| Retained 50% Modulus, % | 122 | 140 | 124 | 131 |
| Retained 100% Modulus, % | 133 | 151 | 138 | 146 |
| Retained 200% Modulus, % | 138 | 145 | 133 | 147 |
| Retained 300% Modulus, % | 126 | 130 | 120 | 135 |
| Hardness Change | 4 | 5 | 1 | 6 |

| **Air Aged, 70 Hours @ 125°C** | | | | |
|---|---|---|---|---|
| Tensile (MPa) | 16.4 | 15.5 | 15.7 | 16.3 |
| Elongation, % | 407 | 354 | 316 | 464 |
| 50% Modulus (MPa) | 1.33 | 1.94 | 2.51 | 1.10 |
| 100% Modulus (MPa) | 2.66 | 3.75 | 4.69 | 2.14 |
| 200% Modulus (MPa) | 7.21 | 8.81 | 10.4 | 5.96 |
| 300% Modulus (MPa) | 12.4 | 13.7 | 15.5 | 10.6 |
| Hardness (Shore A) | 58 | 63 | 64 | 58 |

| **Retentions** | | | | |
|---|---|---|---|---|
| Retained Tensile, % | 85 | 86 | 90 | 84 |
| Retained Elongation, % | 58 | 63 | 57 | 71 |
| Retained 50% Modulus, % | 191 | 227 | 251 | 158 |
| Retained 100% Modulus, % | 243 | 258 | 300 | 192 |
| Retained 200% Modulus, % | 250 | 222 | 246 | 198 |
| Retained 300% Modulus, % | 200 | 169 | 184 | 165 |
| Hardness Change | 10 | 10 | 8 | 12 |

| **Adhesion To Fabric, 25mm Strip** | | | | |
|---|---|---|---|---|
| Fresh Compound | | | | |
| Fresh adhesion (N/25mm) | 271 | 155 | 113 | 248 |

| **Adhesion To GFN22 Fabric, 1" Strip** | | | | |
|---|---|---|---|---|
| Uncured Compound Aged 2 Weeks @ 50°C | | | | |
| Aged adhesion (N/25mm) | 84 | 109 | 63 | 166 |
| % Retained | 31 | 70 | 56 | 67 |

## Claims

1. A composite material comprising textile fibers having distributed over surface portions thereof an RFL adhesive; and a vulcanizable rubber composition comprising:
(A) 50 to 100 parts by weight of polychloroprene rubber;
(B) zero to 50 parts by weight of at least one additional rubber; and
(C) from 0.1 to 40 parts by weight of a hydrotalcite.

2. The composite material of claim 1, wherein said at least one additional rubber is selected from the group consisting of poly-epichlorohydrin, polyisobutylene, halogenated-polyisobutylene, natural rubber, polyisoprene, polybutadiene, styrene-butadiene rubber, and mixtures thereof.

3. The composite material of claim 1 or 2, wherein said at least one hydrotalcite comprises a compound of formula I
Mg₍₁₋ₓ₎Alₓ(OH)₂(CO₃)_{x/2} • n H₂O; 0.25 < x < 0.33. (I)

4. The composite material of claim 1, wherein said textile fiber are selected from the group consisting of woven fabrics, knitted fabric, or spun bonded fabric, and fiber cord.

5. The composite material of claim 1 or 4, wherein said textile fibers comprises a material selected from the group consisting of rayon, nylon, polyester, aramid, cotton, and combinations thereof.

6. The composite material of claim 1, further comprising at least one second acid acceptor selected from the group consisting of magnesium oxide, calcium oxide, calcium hydroxide, and lead oxide.

7. The composite material of claim 1, wherein said hydrotalcite is present in an amount ranging from 0.5 to 20 parts by weight.

8. The composite material of claim 1, wherein said hydrotalcite is present in an amount ranging from 1 to 10 parts by weight.

9. The composite material of claim 1 wherein said composite material is a component of an air sleeve, automotive belt, tire, conveyor belt, automotive hose, fuel transport hose, or automotive track

10. A method of adhering textile fibers to a vulcanizable rubber composition in a composite material, comprising
(A) obtaining textile fibers having distributed over surface portions thereof an RFL adhesive; and
(B) contacting said textile fibers with a vulcanizable rubber composition comprising:
(1) 50 to 100 parts by weight of polychloroprene rubber;
(2) zero to 50 parts by weight of at least one additional rubber; and
(3) from 0.1 to 40 parts by weight of a hydrotalcite.
